# EUROPÄISCHE PATENTSCHRIFT

(11) **EP 2 192 423 B1**
(45) Veröffentlichungstag und Bekanntmachung des Hinweises auf die Patenterteilung: **19.04.2017**
(21) Anmeldenummer: 08020632.9
(22) Anmeldetag: 27.11.2008
(51) Int. Cl.: G01V 8/22

(54) **Mehrstrahliges Reflexionslichtgitter und Verfahren zum Betreiben eines mehrstrahligen Reflexionslichtgitters**
Multi-jet reflection light grid and method for operating same
Barrière lumineuse de réflexion à rayons multiples et procédé destiné au fonctionnement d'une barrière lumineuse de réflexion à rayons multiples

(43) Veröffentlichungstag der Anmeldung: 02.06.2010
(73) Patentinhaber: Pepperl + Fuchs GmbH, 68307 Mannheim (DE)
(72) Erfinder: Nutz, Karl, 15370 Petershagen (DE); Bartsch, Stephan, 12207 Berlin (DE); Czeskleba, Marco, 12167 Berlin (DE)
(74) Vertreter: Schiffer, Axel Martin

(56) Entgegenhaltungen:
- EP-A- 1 950 585
- DE-A1- 10 016 892
- DE-A1- 10 355 008
- DE-A1- 19 517 001
- DE-A1- 19 946 476
- DE-U1-202006 003 841

## Beschreibung

Die Erfindung betrifft ein mehrstrahliges Reflexionslichtgitter mit einer Sender-Emp¬fänger-Einheit und ein Verfahren zum Betreiben des mehrstrahligen Reflexionslichtgitters. Das mehrstrahlige Reflexionslichtgitter weist eine Mehrzahl von Lichtsendern zum Aussenden von Licht in einen Überwachungsbereich und mindestens einen Empfänger zum Nachweisen von aus dem Überwachungsbereich kommendem Licht auf.

Ein derartiges mehrstrahliges Reflexionslichtgitter ähnelt einer Zusammenfassung von mehreren Einzelstrahl-Reflexionslichtschranken in einem kompakten Gehäuse, was einem Lichtgitter nahe kommt. Herkömmliche bekannte Reflexionslichtgitter haben den Nachteil, dass eine sichere lückenlose Erkennung eines Objekts in dem Überwachungsbereich nicht in jedem Fall gewährleistet ist, zumal durch eine Empfindlichkeitsein- und/oder -nachstellung des mehrstrahligen Reflexionslichtgitters manuell über Potentiometer erfolgt, was zu Fehleinstellungen führen kann.

Ein gattungsgemäßes Lichtgitter ist in DE 103 55 008 A1 beschrieben. Um die Nachweisempfindlichkeit zu steigern und unempfindlicher gegen Störungen, beispielsweise thermische Driften, zu sein, wird dort ein Filterverfahren vorgeschlagen, bei dem die von den einzelnen Lichtempfängern nachgewiesenen Signale mit den Elementen einer Filtermatrix korreliert werden. Außerdem ist dort die Verwendung eines adaptiven Schwellwerts beschrieben.

Gegenstand des Dokuments DE 195 17 001 A1 ist ein Messverfahren zur Bestimmung von Lichtlaufzeiten. Um auch bei großen Abständen eine hohe Auflösung zu erzielen und gleichzeitig die notwendige Augensicherheit zu gewährleisten, wird dort vorgeschlagen, die Lichtlaufzeit durch Korrelation eines in Abhängigkeit der Zeit gemessenen Empfangssignals eines Lichtempfängers mit einer in einem Sendespeicher abgelegten Sendefunktion zu bestimmen. Außerdem wird dort beschrieben, dass die Sendeleistung eines Lichtsenders so eingestellt werden kann, dass das Ausgangssignal des Lichtempfängers beziehungsweise das Eingangssignal des nachgeschalteten Analog-Digital-Wandlers auf einen Wert eingestellt wird, der der Hälfte des höchstwertigen Bits des Analog-Digital-Wandlers entspricht.

In DE 199 46 476 A1 ist ein weiteres Verfahren zum Überwachen eines Schutzbereichs offenbart, bei dem Lichtlaufzeiten bestimmt und ausgewertet werden. Insbesondere ist dort eine Anordnung mit mehreren Lichtsendern und mehreren Lichtempfängern beschrieben.

Eine Aufgabe der Erfindung ist es, die Zuverlässigkeit derartiger mehrstrahliger Reflektionslichtgitter zu erhöhen, um eine verbesserte sicherere lückenlose Erkennung bei gleichzeitig erhöhter Flexibilität zu günstigeren Kosten zu schaffen. Darüber hinaus ist es Aufgabe der Erfindung, ein Verfahren zum Betreiben des mehrstrahligen Reflexionslichtgitters anzugeben, mit dem eine Alterung des mehrstrahligen Reflexionslichtgitters ausgeglichen werden kann und ein Objektfeststellungssignal des mehrstrahligen Reflexionslichtgitters zuverlässig auch bei langer Betriebsdauer von einer Steuer- und Auswerteeinheit ausgegeben wird.

Diese Aufgabe wird mit dem Gegenstand der unabhängigen Ansprüche gelöst. Vorteilhafte Weiterbildungen der Erfindung ergeben sich aus den abhängigen Ansprüchen und der folgenden Beschreibung.

Erfindungsgemäß wird ein mehrstrahliges Reflexionslichtgitter mit einer Sender-Empfänger-Einheit und ein Verfahren zum Betreiben des mehrstrahligen Reflexionslichtgitters geschaffen. Das mehrstrahlige Reflexionslichtgitter weist eine Mehrzahl von Lichtsendern zum Aussenden von Licht in einen Überwachungsbereich und mindestens einen Empfänger zum Nachweisen von aus dem Überwachungsbereich kommendem Licht auf. Die Lichtsender sind dazu zeilenartig nebeneinander beabstandet angeordnet. Ein Reflektor ist zum Begrenzen des Überwachungsbereichs und zum Zurückstrahlen des Lichts der Lichtsender in Richtung des Empfängers oder der Empfänger gegenüberliegend zu der Sender-Empfänger-Einheit angeordnet.

Eine Steuer- und Auswerteeinheit ist zum Abgeben eines Objektfeststellungssignals auf Grundlage der von dem Empfänger oder den Empfängern nachgewiesenen Lichtintensitäten vorgesehen. Diese Steuer- und Auswerteeinheit ist eingerichtet, um automatisch ein vorbestimmtes Ausgangssollsignal des Empfängers und/oder eine vorbestimmte Summe der Ausgangssignale aller Empfänger zum Abgeben eines Objektfeststellungssignals bereitzustellen, wenn das Ausgangssignal eines Empfängers und/oder die Summe aller Ausgangssignale aller Empfänger kleiner als ein vorbestimmter Anteil des Ausgangssollsignals ist. Ferner ist die Steuer- und Auswerteeinheit in der Lage, ein kontinuierliches Überwachen und automatisches Nachregeln des Ausgangssollsignals sicherzustellen.

Bei der Mehrzahl von Lichtsendern, die bei dem mehrstrahligen Reflexionsgitter vorhanden sein sollen, kann es sich grundsätzlich um separate Lichtquellen, beispielsweise separate Leuchtdioden oder Laser handeln. Prinzipiell kann die Mehrzahl von Lichtsendern aber auch mit Hilfe einer einzigen Lichtquelle oder jedenfalls einer im Vergleich zur Zahl der Lichtsender kleineren Zahl an Lichtquellen realisiert werden. Beispielsweise kann eine geeignete Optik zur Aufteilung des Senderlichtstrahls einer einzigen Lichtquelle vorhanden sein, so dass aus einer Lichtquelle mehrere Strahlen oder mehrere Lichtsender abgeleitet werden. Beispielsweise kann hierfür eine Beugungsoptik oder diffraktive Optik vorhanden sein.

Ein derartiges mehrstrahliges Reflexionslichtgitter hat gegenüber einer Einzelstrahl-Reflexionslichtschranke den Vorteil, dass auch beschädigte Objekte oder Objekte mit nicht definierten oder undefinierten Vorderkanten, beispielsweise beschädigte Transportpaletten, sicher detektiert werden. Außerdem wird bei dem erfindungsgemäßen mehrstrahligen Reflexionslichtgitter eine Kontrasterkennung oder Kontrastbewertung durchgeführt. Dazu decken mehrstrahlige optische Sensoren auf Reflexionsbasis einen großen Überwachungsbereich bzw. ein großes Detektionsfeld ab. Für Anwendungen wie das Erkennen von unterschiedlich hohen und auch beschädigten Transportpaletten ergibt sich eine sichere Erkennungsbasis, die Detektionslücken weitgehend ausschließt.

Die Zuverlässigkeit insbesondere gegenüber Einzelstrahl-Reflexionslichtschranken wird deutlich erhöht und eine verbesserte lückenlose Erkennung mit mehr Flexibilität sichergestellt. Dabei kann die Sender-Empfänger-Einheit in ihrer Zuverlässigkeit weiter erhöht werden, wenn sie mit dem Prinzip einer Reflexionslichtschranke mit Polarisierungsfilter arbeitet. Dadurch wird sichergestellt, dass das Messergebnis durch einspiegelnde Objekte weniger stark oder gar nicht beeinflusst wird. Das Empfangssignal für die Sender-Empfänger-Einheit kommt von dem Reflektor, auf den mehrere Lichtsender gerichtet sind, wobei die Lichtsender und die Empfänger in einem gemeinsamen Gehäuse nebeneinander beabstandet angeordnet sind. Das Schaltkriterium für die Abgabe eines Objektfeststellungssignals besteht in einer Änderung des Empfangssignals gegenüber einem objektfreien Empfang eines vorgegebenen Ausgangssollsignals. Das bedeutet, dass das mehrstrahlige Reflexionslichtgitter schaltet, sobald das vom Reflektor zurückreflektierte Licht einen bestimmten fest definierten Prozentsatz unterschreitet. Dabei wird die Anordnung von mehreren Sendern und Empfängern in einem länglichen Gehäuse derart betrieben, dass sie einen durch einen Reflektor begrenzten Überwachungsbereich mit hoher Energie ausleuchten. Die Lichtsender können hierbei einzeln im Multiplexverfahren oder alle gleichzeitig angesteuert werden.

Auf der Seite des Empfängers befindet sich eine Anzahl von Linsen, hinter der einzelne Empfangselemente angeordnet sind. Alle Empfangselemente sind entweder so verbunden, dass über eine Steuer- und Auswerteeinheit ein Summensignal aller Empfangssignale zur Weiterverarbeitung gewonnen werden kann oder die Empfänger einzeln im Multiplexverfahren auswertbar sind. Auf der Lichtsenderseite befindet sich beispielsweise eine Anzahl von Linsen, hinter denen sich einzelne Lichtsender befinden, die über die Reichweite einen relativ homogen ausgeleuchteten Überwachungsbereich bilden.

In einem bevorzugten "Teach-Modus" lernt sich der Empfänger der Sender-Empfänger-Einheit zunächst auf den hellsten Reflexionspunkt ein. Dieser hellste Reflexionspunkt wird im typischen Fall auf dem Reflektor liegen. Dabei wird die Senderleistung und/oder die Empfangsempfindlichkeit so geregelt, dass das auszuwertende Empfangssignal nicht übersteuert ist und exakt dem gewünschten Ausgangssollwert entspricht. Damit wird gleichzeitig in vorteilhafter Weise eine Empfindlichkeitsreserve geschaffen, die für ein automatisches Nachregeln des eingelernten Ausgangssollwerts bei langfristigem schleichenden Verschlechtern der Empfindlichkeit des mehrstrahligen Reflexionslichtgitters nützlich ist, um für eine lange Betriebsdauer eine ausreichende Empfangsempfindlichkeit und damit ein konstantes Ausgangssollsignal zur Verfügung zu stellen.

Kommt nun ein Objekt in das Feld zwischen Sensor und Reflektor und damit in den Überwachungsbereich, dessen Geometrie durch den Reflektor mitbestimmt wird, so ändert sich das Kontrastverhältnis und es gelangt weniger remittiertes Licht zum Empfänger zurück. Das Empfangssignal ist also geringer, als das ursprünglich im "Teach-Modus" eingelernte Referenzsignal vom Reflektor. Dieses eingelernte Referenzsignal ist ein vorbestimmtes Ausgangssollsignal des Empfängers und/oder einer vorbestimmten Summe der Ausgangssignale aller Empfänger. Ein Objektfeststellungssignal wird abgegeben, wenn das Ausgangssignal des Empfängers und/oder die Summe aller Ausgangssignale aller Empfänger kleiner als ein vorbestimmter Anteil des Ausgangssollsignals ist.

In einer bevorzugten Ausführungsform des mehrstrahligen Reflexionslichtgitters wird das Ausgangssollsignal mittels der Verstärkung des Empfängers oder der Empfänger eingestellt. Dieses Ausgangssollsignal wird bei der Einrichtung des mehrstrahligen Reflexionslichtgitters mit Polarisationsfilter vor Ort durch die Installationsentfernung zum Reflektor beeinflusst. Je weiter der Reflektor entfernt ist, umso geringer wird die reflektierte Lichtintensität, die an der Sender-Empfänger-Einheit aufgrund der Divergenz des ausgestrahlten Lichts erfassbar ist. Somit ist es erforderlich, dass das Ausgangssollsignal bei der Installation von Reflektor und Sender-Empfänger-Einheit auf einen vorbestimmten festen Wert automatisch eingelernt wird.

Alternativ oder ergänzend kann auch der Ausgangssollwert mittels der Sendeleistung des Lichtsenders eingestellt werden. Auch dieser Sendeleistungsbereich wird, je größer die Reserve ist, die Betriebsdauer und Zuverlässigkeit des mehrstrahligen Reflexionslichtgitters langfristig vergrößern, da bei schleichender Beeinträchtigung der reflektierten Lichintensität automatisch die Sendeleistung der Lichtsender und/oder die Verstärkung des Empfängers vergrößert werden muss. Dazu weist in einer bevorzugten Ausführungsform der Erfindung die Steuer- und Auswerteeinheit eine Nachregelungseinrichtung auf zum automatischen Nachstellen des Ausgangssollsignals auf den vorbestimmten Wert bei Beeinträchtigung der optischen Eigenschaften einer Optik, der Sender-Empfänger-Einheit und/oder des Reflektors.

Grundsätzlich kann der Ausgangssollwert durch Regelung sowohl der Sendeleistung als auch der Verstärkung des Empfängers oder der Empfänger während des Einlernens geregelt oder eingestellt werden.

Derartige Beeinträchtigungen erfolgen schleichend und in größeren Zeiträumen als im Vergleich zu den typischen Objektnachweisfrequenzen. Je größer folglich die Reserve in der Sendeleistung der Lichtsender als auch die Reserve in der Verstärkung der Empfänger ist, umso länger kann die Nachregelungseinrichtung automatisch das Ausgangsollsignal nachstellen und für lange Wartungsintervalle sorgen. Eine Wartung oder Reinigung ist dann erst erforderlich, wenn die optischen Komponenten derart verschmutzt sind, dass weder die Sendeleistung der Lichtsender noch die Verstärkung des Empfängers ausreichen, um das Ausgangssollsignal sicherzustellen. Bereits entsprechende Wartungsmaßnahmen wie Reinigungsmaßnahmen können die Beeinträchtigungen der optischen Eigenschaften einer Optik, der Sender-Empfänger-Einheit und/oder des Reflektors aufheben. Aufgrund einer vorgesehenen Anzeigevorrichtung, die ein Warn- oder Wartungssignal automatisch auslöst, ist es für das erfindungsgemäße mehrstrahlige Reflexionslichtgitter nicht erforderlich von vornherein periodische Wartungsintervalle festzulegen.

In einer bevorzugten Ausführungsform der Erfindung ist es vorgesehen, dass die Steuer- und Auswerteeinheit mit einer Warnanlage zum Ausgeben des Warn- oder Wartungssignals zusammenwirkt, wenn weder eine Erhöhung der Verstärkung des Empfängers oder der Empfänger noch eine Erhöhung der Sendeleistung der Lichtsender bei objektfreiem Überwachungsbereich ein Erreichen des Ausgangssollsignals ermöglicht. Dieses kennzeichnet die Situation, dass die Oberflächen der Optik der Lichtsender und Empfänger und/oder des Reflektors so stark beeinträchtigt sind, dass trotz Nachregelung der Verstärkung der Empfänger bzw. der Sendeleistung der Lichtsender das Sollausgangssignal nicht mehr erreicht wird und nur durch Wartung bzw. Reinigung der optischen Komponenten des mehrstrahligen Reflexionslichtgitters die Funktionsfähigkeit wiederhergestellt werden kann.

Dabei ist Voraussetzung, dass die Sender-Empfänger-Einheit und der Reflektor geometrisch aufeinander ausgerichtet sind und dass der ausgeleuchtete Bereich für eine beispielsweise zeilenartige Anordnung der Sender-Empfänger-Einheit und des Reflektors in einer Richtung deutlich größer ist, als in Richtung quer dazu. Der Querschnitt des ausgeleuchteten Bereichs kann etwa die Form eines länglichen oder langgestreckten Rechtecks aufweisen, wobei sowohl die Empfänger als auch die Sender nicht notwendigerweise auf einer Linie angeordnet sind. Nach einer Wartung bzw. Reinigung soll das Ausgangssollsignal wieder auf einen vorgegebenen Empfangspegel des Empfängers oder der Empfänger für die Summe der reflektierten und empfangenen Lichtintensitäten bei objektfreiem Überwachungsbereich erneut einstellbar und automatisch nachregelbar sein. Die zeilenartige Anordnung der Sender-Empfänger-Einheit und des Reflektors ist zwar eine bevorzugte Ausgestaltung des erfindungsgemäßen mehrstrahligen Reflexionslichtgitters. Zur Verwirklichung der Erfindung ist dies aber nicht unbedingt notwendig. Grundsätzlich kann der Reflektor beispielsweise auch eine im Wesentlichen quadratische Form, etwa mit einer Seitenlänge von wenigen cm, aufweisen.

Wichtig ist, dass die Sender-Empfänger-Einheit und der Reflektor jedenfalls einen so großen Bereich überdecken oder durch Strahlen, dass die in Frage kommenden Objekte zuverlässig nachgewiesen werden können.

Um sicherzustellen, dass ein Objekt beim Betreiben des mehrstrahligen Reflexionslichtgitters in dem Überwachungsbereich angeordnet ist, wird vorzugsweise zum Ausgeben des Objektfeststellungssignals das Ausgangssignal eines Empfängers und/oder die Summe aller Ausgangssignale aller Empfänger um beispielsweise mindestens 10% kleiner als das Ausgangssollsignal sein. Mit dieser Grenze von 10% wird sichergestellt, dass kleinere Schwankungen beim Ausgangssignal eines Empfängers oder bei der Summe aller Ausgangssignale aller Empfänger nicht fehlerhaft ein Objektfeststellungssignal durch die Steuer- und Auswerteeinheit auslösen. Dazu wird, wie oben beschrieben, eine definierte Fläche im Überwachungsbereich überwacht, wobei vorzugsweise die Höhe des Detektionsfeldes und die Kombination aus Maßnahmen, um in diesem Bereich eine sichere Detektion gewährleisten zu können, den entscheidenden Vorteil dieser Erfindung bilden. Die angegebene Grenze von 10% wurde für bestimmte Mess- und Anwendungssituationen als vorteilhaft ermittelt. Diese Grenze kann sich bei anderen Anwendungen um einige Prozentpunkte in der einen oder anderen Richtung verändern.

Der Überwachungsbereich kann beispielsweise eine Höhe von 6 cm über die gesamte Reichweite des mehrstrahligen Reflexionslichtgitters aufweisen. Jedoch sind auch größere Überwachungsfelder und Überwachungsflächen erfindungsgemäß möglich. Insbesondere im Bereich der Palettenerkennung und -überwachung ist das mehrstrahlige Reflexionslichtgitter deutlich den üblicherweise eingesetzten einstrahligen Reflexionslichtschranken sowie auch bekannten mehrstrahligen Reflexionslichtgittern überlegen, bei denen nicht die Möglichkeit besteht, automatisch einen Ausgangssollwert aufrecht zu erhalten, sondern vielmehr manuell eine Schaltschwelle einzustellen und manuell nachzuregeln ist.

Mit dem neuen mehrstrahligen Reflexionslichtgitter wird somit ein fest definiertes Detektionsfeld bzw. ein Überwachungsbereich mit einer definierten Höhe gewährleistet. Da immer ein konstant bleibender Kontrastunterschied erkannt wird, kann die Objektgröße annähernd über die gesamte Reichweite konstant bleiben. Beispielsweise können bei bestimmten Ausführungen der Erfindung die Objektgrößen bis 1,4m 12mm betragen und bis 4m Reflektorabstand dann 14mm. Im Vergleich zum Stand der Technik, wo die nachzuweisende Größe der Objekte proportional mit dem Abstand zum Reflektor und außerdem deutlich stärker anwächst, ist dies ein erheblicher Vorteil. Dazu sind mehrere Lichtsender vorgesehen, um das Detektionsfeld auch im Nahbereich sicherzustellen. Entsprechend können ein oder mehrere Empfänger eingesetzt werden, die bei einem "Teaching" oder Einlernen zur Installationsentfernung zwischen Sender-Empfänger-Einheit und Reflektor eingestellt werden. Auch die Kontrasterkennung unter Auslösung eines Objektfeststellungssignals und damit die Reaktion auf eine Reduzierung des Empfangssignals kann auf einen bestimmten Anteil des Ausgangssollsignals festgelegt werden und beträgt vorzugsweise die oben erwähnten 10%.

Besonders vorteilhaft für das erfindungsgemäße mehrstrahlige Reflexionslichtgitter ist die Nachregelung der Verstärkung der Lichtsendeleistung, um den eingelernten Empfangspegel der Empfänger stabil zu halten und immer einen definierten Kontrastunterschied, der bei Objekteintritt in den Überwachungsbereich entsteht, erkennen zu können. Damit liegen die Vorteile der vorliegenden Erfindung bei der verbesserten Kontrasterkennung, der Nachregelung und dem "Teaching" eines Ausgangssollsignals, insbesondere für die Anwendung in Bezug auf eine Palettenerkennung. Allgemein können Objekte mit geringen Höhendifferenzen, die nicht oder schlecht definierte oder undefinierte Vorderkanten aufweisen und innerhalb des Überwachungsbereichs liegen, besonders gut nachgewiesen werden. Beispielsweise kann es sich hierbei auch um Kisten handeln.

Ein Verfahren zum Betreiben eines mehrstrahligen Reflexionslichtgitters, wie es oben beschrieben ist, weist die nachfolgenden Verfahrensschritte auf. Zunächst werden die Sender-Empfänger-Einheit und der Reflektor geometrisch aufeinander ausgerichtet. Anschließend wird eine Sendeleistung der Lichtsender und/oder eine Verstärkung des Empfängers oder der Empfänger bei freiem Lichtweg zwischen Sender-Empfänger-Einheit und Reflektor automatisch so eingestellt werden, dass der oder die Empfänger einzeln oder insgesamt ein vorbestimmtes Ausgangssollsignal liefern. Ferner wird ein Objektfeststellungssignal dann abgegeben, wenn das Empfangssignal des Empfängers oder die Summe der Empfangssignale aller Empfänger kleiner ist als ein vorbestimmter Anteil des Ausgangssollsignals.

Um möglichst weitgehend die Aufrechterhaltung des vorbestimmten Ausgangssollsignals bei freiem Lichtweg zu gewährleisten, werden die Verstärkung des Empfängers oder der Empfänger und die Sendeleistung der Lichtsender kontinuierlich nachgeregelt. Diese kontinuierliche Nachregelung soll einer schleichenden Beeinträchtigung der Optik der Sender-Empfänger-Einheit oder des Reflektors entgegenwirken, bis entweder ein Erhöhen der Sendeleistung des Lichtsenders oder ein Erhöhen der Verstärkerleistung des Empfängers oder der Empfänger nicht mehr ausreicht, um bei objektfreiem Überwachungsbereich ein Erreichen des Ausgangssollsignals zu ermöglichen. In diesem Fall wird vorzugsweise von der Steuer- und Auswerteeinheit ein Warnsignal oder ein Wartungssignal ausgelöst, so dass die Beeinträchtigung der Optik, der Sende-Empfänger-Einheit und des Reflektors beispielsweise durch Reinigungsmaßnahmen aufgehoben werden kann.

Dazu kann die Steuer- und Auswerteeinheit als Warnsignal oder Wartungssignal ein optisches Signal und/oder ein akustisches Signal auslösen. Vorzugsweise werden zur Erhöhung der Empfindlichkeit und der Lichtintensität im Überwachungsbetrieb die Lichtsender der Sender-Empfänger-Einheit gleichzeitig betrieben. Jedoch ist es grundsätzlich auch möglich, die Lichtsender der Sender- und Empfängereinheit in einem Multiplexverfahren zu betreiben.

Die Erfindung wird nun anhand der beigefügten Figuren näher erläutert.
- Figur 1: zeigt eine zeilenartige Anordnung einer Sender-Empfänger-Einheit gemäß einer ersten Ausführungsform;
- Figur 2: zeigt eine zeilenartige Anordnung einer Sender-Empfänger-Einheit gemäß einer zweiten Ausführungsform;
- Figur 3: zeigt eine schematische Ansicht eines mehrstrahligen Reflexionslichtgitters nach optimaler Ausrichtung der Sender-Empfänger-Einheit auf einen Reflektor;
- Figur 4: zeigt in schematischer Ansicht ein drittes Ausführungsbeispiel eines erfindungsgemäßen mehrstrahligen Reflexionslichtgitters; und
- Figur 5: zeigt in schematischer Ansicht ein einstrahliges Überwachungssystem nach dem Stand der Technik.

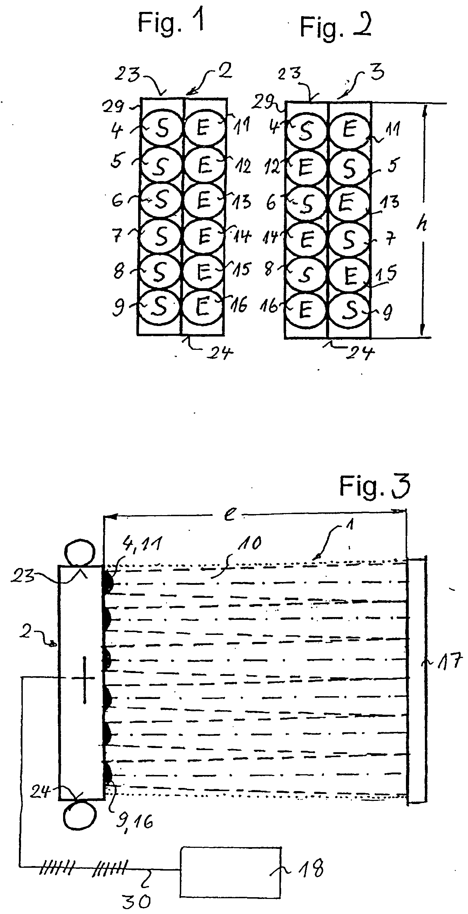

Figur 1 zeigt eine zeilenartige Anordnung einer Sender-Empfänger-Einheit 2 gemäß einer ersten Ausführungsform. Bei dieser zeilenartigen Anordnung sind in einem gemeinsamen Gehäuse 29 sechs Lichtsender S mit den Bezugszeichen 4 bis 9 zeilenartig nebeneinander bzw. untereinander angeordnet. Die zugehörigen Empfänger E mit den Bezugszeichen 11 bis 16 sind den Lichtsendern in einer weiteren Zeile zugeordnet. Eine derartige Sender-Empfänger-Einheit 2 weist einen oberen ersten Rand 23 und einen unteren zweiten Rand 24 auf, welche das Gehäuse 29 nach unten bzw. nach oben begrenzen. In der gezeigten Ausführungsform der Erfindung beträgt die Höhe des Gehäuses 29 6 cm. Aufgrund der flächigen Erstreckung der Lichtsender S wird ein Überwachungsbereich ausgeleuchtet, der eine Ausdehnung aufweist, die in einer Richtung deutlich größer ist, als in einer Richtung quer dazu. Der Querschnitt des ausgeleuchteten Bereichs weist also etwa die Form eines länglichen oder langgestreckten Rechtecks auf. Die Breite dieses Querschnitts kann noch vergrößert werden, wenn Sender und Empfänger wie in Figur 2 gezeigt angeordnet werden. Die im Querschnitt längliche Form des Überwachungsbereichs ist aber nicht unbedingt zur Realisierung der Erfindung notwendig. Grundsätzlich kann der Querschnitt des ausgeleuchteten Bereichs eine beliebige Form, beispielsweise auch eine im Wesentlichen quadratische oder runde Form, aufweisen.

Figur 2 stellt eine zeilenartige Anordnung einer Sender-Empfänger-Einheit 3 gemäß einer zweiten Ausführungsform dar. Komponenten mit gleichen Funktionen wie in Figur 1 sind mit gleichen Bezugszeichen gekennzeichnet und werden nicht extra erörtert. Der Unterschied zu Figur 1 besteht darin, dass bei dieser zeilenartigen Anordnung der Lichtsender 4 bis 9 und der Empfänger 11 bis 16 die Sender S und die Empfänger E in einer Zick-Zack-Form zueinander angeordnet sind. Diese Form kann zu einem breiteren Überwachungsbereich führen, wobei die Ausrichtung der Lichtsender S und der Empfänger E in vertikaler Richtung nicht zwingend erforderlich ist, jedoch für den Fall einer Anwendung einer Palettenerkennung von Vorteil sein kann, da bei der Palettenerkennung unterschiedlich hohe und beschädigte Paletten eines Transportsystems einer Fertigungshalle, einer Lagerhalle oder im Rahmen eines Be- oder Endladesystems zuverlässiger erkannt werden sollen, als bei einem System mit Einstrahl-Reflexionslichtschranken, bei denen beispielsweise beschädigte Paletten beim Vorbeigleiten manchmal in Abhängigkeit von der Beschädigung nicht erfasst werden können.

Figur 3 zeigt eine schematische Ansicht eines mehrstrahligen Reflexionslichtgitters 1 nach optimaler Ausrichtung der Sender-Empfänger-Einheit 2 auf einen Reflektor 17. Dabei werden von dem Reflektor 17 alle sechs Lichtstrahlen der Lichtsender 4-9 in dem Überwachungsbereich 10 zurückreflektiert und von den Empfängern 11-16 empfangen und registriert. Zur Steuerung und Auswertung ist eine Steuer- und Auswerteeinrichtung 18 vorgesehen und über eine Verbindungsleitung 30 mit der Sender-Empfänger-Einheit 2 elektrisch verbunden. Dabei übernimmt die Steuer- und Auswerteeinheit 18 auch die Überwachung und Nachführung des Ausgangssollsignals, das an den Empfängern E eine konstante Spannung von beispielsweise 500 mV nach Reflexion an dem Reflektor 17 bereitstellen soll.

Zum Einlernen dieser Messspannung wird die Sender-Empfänger-Einheit 2 auf maximale Ausgangsleistung gestellt und dabei kann der Empfänger durchaus übersteuert werden. Prinzipiell kann aber auch der umgekehrte Weg beschritten werden, das heißt, man startet mit einer minimalen Sende- und Empfangsleistung und regelt dann hoch. Anschließend wird sowohl die Sendeleistung der Lichtsender als auch die Verstärkung des Empfängers oder der Empfänger E soweit reduziert, dass das Ausgangssollsignal von 500 mV an den Empfängern eingehalten wird. Damit wird gleichzeitig eine Reserve geschaffen, die vorteilhaft ist, um eine automatische Nachregelung des Ausgangssollsignals auf einen vorbestimmten Wert trotz Beeinträchtigung der optischen Eigenschaften der Optik der Sender-Empfänger-Einheit 2 und/oder des Reflektors vorzusehen. Da diese Beeinträchtigung schleichend vor sich geht, kann mit der automatischen Nachregelung eine lange Betriebsfähigkeit aufrecht erhalten werden, bis sowohl die Nachregelung der Verstärkung des Empfängers als auch die Nachregelung der Sendeleistung des Lichtsenders nicht mehr ausreichen, um das Ausgangssollsignal bei objektfreiem Überwachungsbereich 10 zu gewährleisten.

In einem derartigen Fall kann die Steuer- und Auswerteeinheit 18 ein Warn- oder Wartungssignal auslösen, das optisch oder akustisch angezeigt wird, damit das mehrstrahlige Reflexionslichtgitter und dessen Komponenten in einer Wartungspause beispielsweise von Kontaminationen und/oder Staubablagerungen gereinigt wird.

Wie Figur 3 zeigt, divergieren die Lichtstrahlen der Lichtsender selbst dann, wenn die Lichtstrahlen der Lichtsender durch eine entsprechende Optik nahezu parallel auf den Reflektor 17 treffen. Durch diese Divergenz der Strahlung nimmt das Auflösevermögen im Überwachungsbereich zum Reflektor hin ab und gleichzeitig vermindert sich die reflektierte Lichtintensität in Abhängigkeit von der Länge I des Überwachungsbereichs 10. Somit ist es erforderlich, für unterschiedliche Anwendungen und Installationen des mehrstrahligen Reflexionslichtgitters 1 einen "Teaching"-Prozess oder Einlernprozess durchzuführen, bei dem das vorgegebene Ausgangssollsignal von beispielsweise 500 mV einmalig für die automatische Nachregelung eingestellt wird.

Auch diese einmalige Einstellung kann automatisch erfolgen, ohne dass dazu manuell in den "Teaching"-Prozess eingegriffen werden muss. Lediglich der Ausgangssollwert wird einmalig vom Programm vorgegeben und die Einstellung der Empfangsverstärkung sowie die Einstellung der Sendeleistung der Lichtsender erfolgt dann automatisch. Alternativ oder ergänzend kann auch eine Vorgabe von Ausgangssollwerten über einen Wahlschalter für unterschiedliche Objektgrößen und/oder Kontraste vorgesehen sein. Wird schließlich im Überwachungsfall ein Objekt in den Überwachungsbereich eingeführt, so wird, durch das Objekt verursacht, ein Objektfeststellungssignal ausgelöst. Dieser vorbestimmte Mindestanteil ist erforderlich, um eine Fehlauslösung von Objektfeststellungssignalen zu vermeiden. Je nach Anwendungsfall kann dieser Anteil weiter erhöht oder auch vermindert werden. Eine weitere Verbesserung der Zuverlässigkeit kann dadurch erreicht werden, dass das mehrstrahlige Reflexionslichtgitter 1 mit Polarisationsfiltern ausgestattet wird, die einen wirkungsvollen Schutz gegen Einspiegelung auf den Überwachungsbereich 10 bzw. auf die Sender-Empfänger-Einheit 2 ermöglichen.

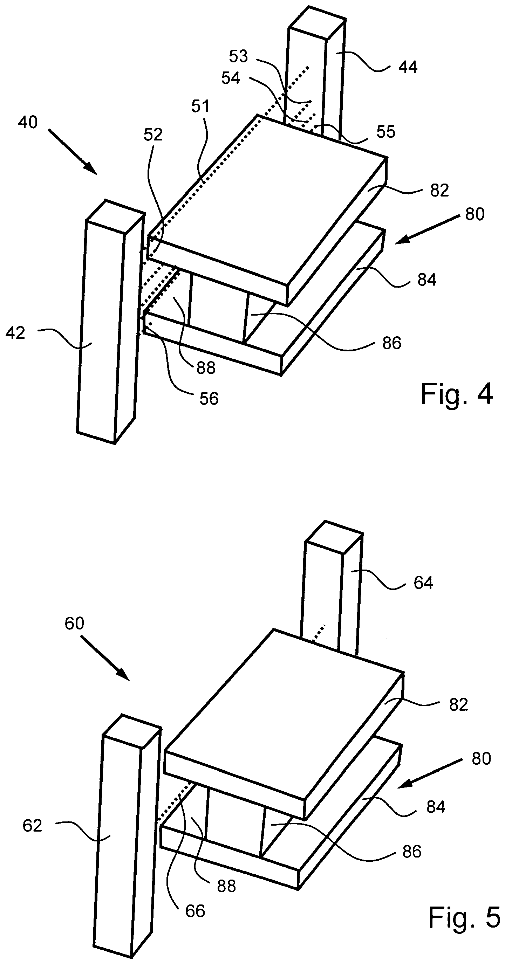

Die durch die Erfindung gegenüber dem Stand der Technik erzielte Verbesserung beim Erkennen von Objekten mit nicht definierten oder undefinierten Vorderkanten wird mit Bezug auf die Figuren 4 und 5 näher erläutert.

Figur 5 zeigt in schematischer Ansicht ein weiteres Ausführungsbeispiel eines erfindungsgemäßen mehrstrahligen Reflexionslichtgitters 40. Als wesentliche Bestandteile weist dieses mehrstrahlige Reflexionslichtgitter 40 eine Sender-Empfänger-Einheit 42 und einen Reflektor 44 auf. Die Sender-Empfänger-Einheit 42 kann prinzipiell so aufgebaut sein, wie bei dem im Zusammenhang mit den Figuren 1 und 2 beschriebenen Ausführungsbeispiel. Durch Sendelichtstrahlen 51,..,56, die im Folgenden auch kurz als Strahlen bezeichnet werden, wird ein im Querschnitt länglicher Überwachungsbereich durchstrahlt. Als Beispiel eines nachzuweisenden Objekts ist in den Figuren 4 und 5 ein Teil einer Transportpalette 80 mit einer oberen Platte 82, einer unteren Platte 84 und einem dazwischen angeordneten Träger 86 dargestellt.

Figur 5 zeigt im Vergleich dazu eine Reflexionslichtschranke 60 nach dem Stand der Technik mit einer Sender-Empfänger-Einheit 62 und einem Reflektor 64. Auch in Figur 5 ist beispielhaft und schematisch eine Transportpalette 80 dargestellt.

Der wesentliche Unterschied der in Figur 5 gezeigten Reflexionslichtschranke 60 aus dem Stand der Technik im Vergleich zu dem in Figur 4 dargestellten erfindungsgemäßen mehrstrahligen Reflexionslichtgitter 40 besteht darin, dass die Reflexionslichtschranke 60 nur einen Lichtstrahl 66 aussendet, der vom Reflektor 64 in Richtung der Sender-Empfänger-Einheit 62 zurückreflektiert und dort nachgewiesen wird. Bei solch einer Reflexionslichtschranke 60, die auch als einstrahliges System bezeichnet werden kann, kann es bei Objekten von der Art der in den Figuren 4 und 5 beispielhaft dargestellten Transportpalette 80 ohne weiteres dazu kommen, dass ein Bereich 88 von dem einzigen Lichtstrahl 66 durchsetzt wird, so dass dieser von dem Empfänger in der Sender-Empfänger-Einheit 62 nachgewiesen werden kann. Die Palette 80 ist dabei aber bereits in den Überwachungsbereich eingedrungen, ohne nachgewiesen worden zu sein, was aber unbedingt vermieden werden soll.

Demgegenüber wird bei dem in Figur 4 gezeigten Ausführungsbeispiel des erfindungsgemäßen mehrstrahligen Reflexionslichtgitters 40 der Überwachungsbereich durch eine Mehrzahl von Lichtstrahlen 51,..,56 durchsetzt. In der in Figur 4 gezeigten Situation fällt dabei der Lichtstrahl 52 auf einen Randbereich der oberen Platte 82 und der Lichtstrahl 56 trifft auf einen Rand- oder Stirnbereich der unteren Platte 84 der Palette 80. Während die Strahlen 51, 53, 54, 55 ungehindert zum Reflektor 44 durchtreten und von diesem in Richtung der Sender-Empfänger-Einheit 42 zurückgestrahlt und dort nachgewiesen werden, wird jedenfalls für die Strahlen 52 und 56 kein entsprechendes Empfangssignal in der Sender-Empfänger-Einheit 42 nachgewiesen. Insgesamt kann ein Eindringen der Palette 80 in den Überwachungsbereich mit erheblich größerer Zuverlässigkeit nachgewiesen werden, als bei der einstrahligen Reflexionslichtschranke 60 aus dem Stand der Technik, die in Figur 5 gezeigt ist. Die Palette 80 hat insoweit eine nicht definierte oder undefinierte Vorderkante, als durch den Bereich 88 bei entsprechender Positionierung relativ zu den Lichtstrahlen des mehrstrahligen Reflexionslichtgitters 40 beziehungsweise zum Lichtstrahl 66 der Reflexionslichtschranke 60 Lichtstrahlen durch diesen Bereich 88 hindurchtreten können.

Eine vertikale Ausrichtung der Lichtsender und der Empfänger wie bei den in den Figuren gezeigten Ausführungsbeispielen ist zwar nicht zwingend erforderlich. Für den Fall einer Palettenerkennung kann die vertikale zeilenweise Anordnung aber von Vorteil sein, weil dabei unterschiedlich hohe, beschädigte Paletten bzw. Objekte mit undefinierter Vorderkante eines Transportsystems einer Fertigungshalle, einer Lagerhalle oder im Rahmen eines Bestückungssystems zuverlässiger erkannt werden, als bei einem System mit Einzelstrahl-Reflexions-Lichtschranken, wo beispielsweise beschädigte Paletten beim Vorbeigleiten nicht immer zuverlässig erfasst werden. Die Höhe h des mehrstrahligen Reflexionslichtgitters 40 gemäß Figur 4 kann beispielsweise 6cm betragen.

Mit der vorliegenden Erfindung werden ein neuartiges mehrstrahliges Reflexionsgitter und ein Verfahren zum Betreiben eines mehrstrahligen Reflexionsgitters bereitgestellt, mit welchen im Hinblick auf die Erkennung von Objekten mit undefinierten oder nicht definierten Vorderkanten, insbesondere auch von Objekten mit beschädigten Vorderkanten, deutliche Verbesserungen erreicht werden können.

## Patentansprüche

1. Mehrstrahliges Reflexionslichtgitter
mit einer Sender-Empfängereinheit (2), welche eine Mehrzahl von Lichtsendern (4-9) zum Aussenden von Licht in einen Überwachungsbereich (10) und mindestens einen Empfänger (11) zum Nachweisen von aus dem Überwachungsbereich (10) kommendem Licht aufweist,
mit einem Reflektor (17) zum Begrenzen des Übenrvachungsbereichs (10) und zum Zurückstrahlen des Lichts der Lichtsender (4-9) in Richtung des Empfängers (11) oder der Empfänger (11-16) und
mit einer Steuer- und Auswerteeinheit (18) zum Abgeben eines Objektfeststellungssignals auf Grundlage der von dem Empfänger (11) oder den Empfängern (11-16) nachgewiesenen Lichtintensitäten,
**dadurch gekennzeichnet,**
**dass** die Steuer- und Auswerteeinheit (18) eingerichtet ist
zum automatischen Bereitstellen eines vorbestimmten Ausgangssollsignals des Empfängers (11) und/oder einer vorbestimmten Summe der Ausgangssignale aller Empfänger (11-16),
zum Abgeben eines Objektfeststellungssignals, wenn das Ausgangssignal eines Empfängers (11) und/oder die Summe aller Ausgangssignale aller Empfänger (11-16) kleiner als ein vorbestimmter Anteil des Ausgangssollsignals ist,
zum kontinuierlichen Überwachen des Ausgangssollsignals,
zum automatischen Einstellen der Sendeleistung der Lichtsender (4-9) und/oder der Verstärkung des Empfängers (11) oder der Empfänger (11-16) bei freiem Lichtweg zwischen Sender-Empfänger-Einheit (2) und Reflektor (17) dergestalt, dass der Empfänger (11-16) das vorbestimmtes Ausgangssollsignal liefert oder die Empfänger (11-16) die vorbestimmte Summe der Ausgangssignale liefern, und
zum kontinuierlichen Nachregeln der Verstärkung des Empfängers (11) oder der Empfänger (11-16) und/oder der Sendeleistung der Lichtsender (4-9) zum möglichst weitgehenden Aufrechterhalten des vorbestimmten Ausgangssollsignals bei freiem Lichtweg.

2. Reflexionslichtgitter nach Anspruch 1,
**dadurch gekennzeichnet,**
**dass** die Lichtsender (4-9) zeilenartig nebeneinander beabstandet angeordnet sind.

3. Reflexionslichtgitter nach einem der Ansprüche 1 oder 2,
**dadurch gekennzeichnet,**
**dass** die Steuer- und Auswerteeinheit (18) mit einer Warnanlage zum Ausgeben eines Warn- oder Wartungssignals zusammenwirkt, wenn weder eine Erhöhung der Verstärkung des Empfängers (11) oder der Empfänger (11-16) noch eine Erhöhung der Sendeleistung der Lichtsender (4-9) bei objektfreiem Überwachungsbereich (10) ein Erreichen des Ausgangssollsignals ermöglicht.

4. Verfahren zum Betreiben eines mehrstrahligen Reflexionslichtgitters nach einem der Ansprüche 1 bis 3,
**dadurch gekennzeichnet,**
**dass** die Sender-Empfänger-Einheit (2) und der Reflektor (17) zunächst geometrisch aufeinander ausgerichtet werden,
**dass** eine Sendeleistung der Lichtsender (4-9) und/oder eine Verstärkung des Empfängers (11) oder der Empfänger (11-16) bei freiem Lichtweg zwischen Sender-Empfänger-Einheit (2) und Reflektor (17) automatisch so eingestellt werden, dass der oder die Empfänger (11-16) einzeln oder insgesamt ein vorbestimmtes Ausgangssollsignal liefern, dass ein Objektfeststellungssignal abgegeben wird, wenn das Empfangssignal eines Empfängers (11) oder die Summe der Empfangssignale aller Empfänger (11-16) kleiner ist als ein vorbestimmter Anteil des Ausgangssollsignals, und
**dass** die Verstärkung des Empfängers (11) oder der Empfänger (11-16) und/oder die Sendeleistung der Lichtsender (4-9) zum möglichst weitgehenden Aufrechterhalten des vorbestimmten Ausgangssollsignals bei freiem Lichtweg kontinuierlich nachgeregelt werden.

5. Verfahren nach Anspruch 4,
**dadurch gekennzeichnet,**
**dass** ein Warnsignal oder ein Wartungssignal von der Steuer- und Auswerteeinheit (18) ausgelöst wird, wenn weder eine Erhöhung der Verstärkerleistung des Empfängers (11) oder der Empfänger (11-16) noch eine Erhöhung der Sendeleistung der Lichtsender (4-9) bei objektfreiem Überwachungsbereich (10) ein Erreichen des Ausgangssollsignals ermöglichen.

6. Verfahren nach einem der Ansprüche 4 oder 5,
**dadurch gekennzeichnet,**
**dass** als Warnsignal oder Wartungssignal ein optisches Signal und/oder ein akustisches Signal ausgelöst wird.

7. Verfahren nach einem der Ansprüche 4 bis 6,
**dadurch gekennzeichnet,**
**dass** während des Überwachungsbetriebs die Lichtsender (4-9) der Sender-Empfänger-Einheit (2) einzeln im Multiplexverfahren oder vorzugsweise alle Lichtsender (4-9) gleichzeitig betrieben werden.

8. Verfahren nach einem der Ansprüche 4 bis 7,
**dadurch gekennzeichnet,**
**dass** das kontinuierliche Nachregeln der Verstärkung des Empfängers (11) oder der Empfänger (11-16) und/oder der Sendeleistung der Lichtsender (4-9) zum möglichst weitgehenden Aufrechterhalten des vorbestimmten Ausgangssollsignals bei freiem Lichtweg auf einer im Vergleich zu typischen Objektnachweisfrequenzen wesentlich längeren Zeitskala erfolgt.

## Claims

1. Multibeam reflection light grating, having
a transceiver unit (2) which has a plurality of light transmitters (4 - 9) for transmitting light into a monitoring zone (10) and at least one receiver (11) for detecting light coming from the monitoring zone (10),
a reflector (17) to delimit the monitoring zone (10) and radiate back the light of the light transmitters (4 - 9) in the direction of the receiver (11) or the receivers (11 - 16) and
a control and evaluation unit (18) for emitting an object detection signal based on the light intensities detected by the receiver (11) or the receivers (11 - 16), **characterised in that**
the control and evaluation unit (18) is designed
to automatically provide a predetermined output reference signal of the receiver (11) and / or a predetermined sum of the output signals of all receivers (11 - 16), to emit an object detection signal if the output signal of a receiver (11) and / or the sum of all output signals of all receivers (11 - 16) is / are smaller than a predetermined proportion of the output reference signal,
to continuously monitor the output reference signal,
to automatically set the transmission power of the light transmitters (4 - 9) and / or the amplification of the receiver (11) or the receivers (11 - 16) when there is a free light path between the transceiver unit (2) and the reflector (17) such that the receiver (11 - 16) supplies the predetermined output reference signal or the receivers (11 - 16) supply the predetermined sum of the output reference signals, and
to continuously adjust the amplification of the receiver (11) or the receivers (11 - 16) and / or the transmission power of the light transmitters (4 - 9) in order to maintain as far as possible the predetermined output reference signal when there is a free light path.

2. Reflection light grating according to claim 1,
**characterised in that**
the light transmitters (4 - 9) are arranged spaced apart in lines one beside the other.

3. Reflection light grating according to one of claims 1 or 2,
**characterised in that**
the control and evaluation unit (18) interacts with a warning system to output a warning or maintenance signal if neither an increase in the amplification of the receiver (11) or the receivers (11 - 16) nor an increase in the transmission power of the light transmitters (4 - 9) allows the output reference signal to be reached when the monitoring zone (10) is object-free.

4. Method for operating a multibeam reflection light grating according to one of claims 1 to 3,
**characterised in that**
the transceiver unit (2) and the reflector (17) are initially geometrically tailored to each other,
a transmission power of the light transmitters (4 - 9) and / or an amplification of the receiver (11) or the receivers (11 - 16), in the case of a free light path between the transceiver unit (2) and the reflector (17), is / are automatically set so that the receiver or receivers (11 - 16) supply/supplies individually or in total a predetermined output reference signal,
an object detection signal is output if the receive signal of a receiver (11) or the sum of the receive signals of all receivers (11 - 16) is smaller than a predetermined proportion of the output reference signal, and
the amplification of the receiver (11) or the receivers (11 - 16) and / or the transmission power of the light transmitters (4 - 9) is / are continuously adjusted in order to maintain as far as possible the predetermined output reference signal when there is a free light path.

5. Method according to claim 4,
**characterised in that**
a warning signal or a maintenance signal is triggered by the control and evaluation unit (18) if neither an increase in the amplification power of the receiver (11) or the receivers (11 - 16) nor an increase in the transmission power of the light transmitters (4 - 9) allows an output reference signal to be reached when there is an object-free monitoring zone (10).

6. Method according to one of claims 4 or 5,
**characterised in that**
an optical signal and / or an acoustic signal is / are triggered as a warning signal or maintenance signal.

7. Method according to one of claims 4 to 6,
**characterised in that**
during the monitoring operation the light transmitters (4 - 9) of the transceiver unit (2) are operated individually in the multiplex method or preferably all light transmitters (4 - 9) are operated at the same time.

8. Method according to one of claims 4 to 7,
**characterised in that**
the continuous adjustment of the amplification of the receiver (11) or the receivers (11 - 16) and / or the transmission power of the light transmitters (4 - 9) is realised in order to maintain as far as possible the predetermined output reference signal on a time scale that is substantially longer in comparison with typical object detection frequencies when there is a free light path.

## Revendications

1. Barrière lumineuse de réflexion à rayons multiples
avec une unité émettrice-réceptrice (2), qui comprend une pluralité d'émetteurs de lumière (4-9) pour émettre de la lumière dans une zone de surveillance (10) et au moins un récepteur (11) pour détecter la lumière venant de la zone de surveillance (10),
avec un réflecteur (17) pour délimiter la zone de surveillance (10) et pour renvoyer la lumière des émetteurs de lumière (4-9) en direction du récepteur (11) ou des récepteurs (11-16) et
avec une unité de commande et d'évaluation (18) pour livrer un signal de présence d'objet sur la base des intensités lumineuses détectées par le récepteur (11) ou les récepteurs (11-16),
**caractérisée en ce que**
l'unité de commande et d'évaluation (1) est conçue
pour la fourniture automatique d'un signal de consigne de sortie prédéfini du récepteur (11) et/ou d'une somme prédéfinie des signaux de sortie de tous les récepteurs (11-16),
pour la livraison d'un signal de présence d'objet lorsque le signal de sortie d'un récepteur (11) ou/et la somme de tous les signaux de sortie de tous les récepteurs (11-16) est/sont inférieur/s à une partie prédéfinie du signal de consigne de sortie, pour la surveillance continuelle du signal de consigne de sortie,
pour le réglage automatique de la puissance d'émission des émetteurs de lumière (4-9) et/ou de l'amplification du récepteur (11) ou des récepteurs (11-16) lorsque le trajet lumineux est libre entre l'unité émettrice-réceptrice (2) et le réflecteur (17) de sorte que le récepteur (11-16) délivre le signal de consigne de sortie prédéfini ou que les récepteurs (11-16) délivrent la somme prédéfinie des signaux de sortie, et
pour le réajustage continuel de l'amplification du récepteur (11) ou des récepteurs (11-16) et/ou de la puissance d'émission des émetteurs de lumière (4-9) pour maintenir autant que possible le signal de consigne de sortie prédéfini lorsque le trajet lumineux est libre.

2. Barrière lumineuse de réflexion selon la revendication 1,
**caractérisée** enceque
les émetteurs de lumière (4-9) sont disposés alignés et espacés les uns des autres.

3. Barrière lumineuse de réflexion selon la revendication 1 ou 2,
**caractérisée** enceque
l'unité de commande et d'évaluation (18) coopère avec un dispositif d'avertissement pour émettre un signal d'avertissement ou de maintenance, lorsque ni une augmentation de l'amplification du récepteur (11) ou des récepteurs (11-16) ni une augmentation de la puissance d'émission des émetteurs de lumière (4-9) ne permettent, lorsque la zone de surveillance (10) est exempte d'objet, d'atteindre le signal de consigne de sortie.

4. Procédé de fonctionnement d'une barrière lumineuse de réflexion à rayons multiples selon l'une quelconque des revendications 1 à 3,
**caractérisé** enceque
l'unité émettrice-réceptrice (2) et le réflecteur (17) sont orientés d'abord géométriquement l'un vers l'autre,
une puissance d'émission des émetteurs de lumière (4-9) ou/et une amplification du récepteur (11) ou des récepteurs (11-16) est/sont réglée/s automatiquement lorsque le trajet lumineux est libre entre l'unité émettrice-réceptrice (2) et le réflecteur (17), de sorte que le ou les récepteurs (11-16) délivrent individuellement ou conjointement un signal de consigne de sortie prédéfini,
un signal de présence d'objet est délivré lorsque le signal de réception d'un récepteur (11) ou la somme des signaux de réception de tous les récepteurs (11-16) est inférieur à une partie prédéfinie du signal de consigne de sortie, et l'amplification du récepteur (11) ou des récepteurs (11-16) ou/et la puissance d'émission des émetteurs de lumière (4-9) est/sont réajustée/s continuellement pour maintenir autant que possible le signal de consigne de sortie prédéfini lorsque le trajet lumineux est libre.

5. Procédé selon la revendication 4,
**caractérisé** enceque
un signal d'avertissement ou un signal de maintenance de l'unité de commande et d'évaluation (18) est déclenché lorsque ni une augmentation de la puissance de l'amplificateur du récepteur (11) ou des récepteurs (11-16) ni une augmentation de la puissance d'émission des émetteurs de lumière (4- 9) ne permettent d'atteindre le signal de consigne de sortie lorsque la zone de surveillance (10) est exempte d'objet.

6. Procédé selon l'une quelconque des revendications 4 ou 5,
**caractérisé** enceque
un signal optique et/ou un signal acoustique est déclenché en tant que signal d'avertissement ou signal de maintenance.

7. Procédé selon l'une quelconque des revendications 4 à 6,
**caractérisé** enceque
durant le mode de surveillance, les émetteurs de lumière (4-9) de l'unité émettrice-réceptrice (2) sont exploités individuellement selon un procédé de multiplexage ou, de préférence, tous les émetteurs de lumière (4-9) sont exploités simultanément.

8. Procédé selon l'une quelconque des revendications 4 à 7,
**caractérisé** enceque
le réajustement continuel de l'amplification du récepteur (11) ou des récepteurs (11-16) et/ou de la puissance d'émission des émetteurs de lumière (4-9) pour le maintien autant que possible du signal de consigne de sortie prédéfini lorsque le trajet lumineux est libre est effectué sur une échelle temporelle sensiblement plus longue en comparaison à des fréquences typiques de détection d'objets.
